(19) Europäisches Patentamt
European Patent Office
Office européen des brevets

(11) **EP 3 770 866 A1**

(12) **DEMANDE DE BREVET EUROPEEN**

(43) Date de publication:
**27.01.2021 Bulletin 2021/04**

(21) Numéro de dépôt: **20187732.1**

(22) Date de dépôt: **24.07.2020**

(51) Int Cl.:
*G07B 15/00* (2011.01)   *G07C 9/30* (2020.01)
*G06Q 20/32* (2012.01)   *G06Q 20/20* (2012.01)
*G06F 9/46* (2006.01)   *G07B 17/00* (2006.01)
*G06K 9/46* (2006.01)   *G06K 7/14* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **25.07.2019 FR 1908470**

(71) Demandeur: **Spirtech**
**75002 Paris (FR)**

(72) Inventeur: **GRIEU, François**
**75004 Paris (FR)**

(74) Mandataire: **Dupuis-Latour, Dominique et al**
**Bardehle Pagenberg**
**SO Square Opéra**
**5, rue Boudreau**
**75009 Paris (FR)**

(54) **PROCÉDÉ D'IDENTIFICATION ET DE COUPLAGE D'UN TERMINAL CIBLE PROCHE D'UN OBJET ROTATIF PARMI UNE PLURALITÉ DE TERMINAUX À PORTÉE DE COMMUNICATION SANS FIL AVEC L'OBJET PORTATIF**

(57) Chaque terminal porte une image codée distinctive optiquement reconnaissable, différente de celles des autres terminaux et codant un identifiant numérique d'un terminal cible. Chaque terminal comprend une mémoire où est enregistrée une information dérivée de l'identifiant du terminal. Le procédé comprend : c1) par une caméra de l'objet portatif, acquisition de l'image codée du terminal physiquement situé à proximité de l'objet portatif ; c2) décodage de l'image acquise pour produire un identifiant optiquement acquis ; d1) établissement d'une communi-cation avec les terminaux situés à portée de communication de l'objet portatif ; d2) association, dans l'objet portatif et/ou dans un terminal, de l'identifiant optiquement acquis et de l'information représentative correspondant au terminal respectif ; e) comparaison de l'identifiant optiquement acquis et de l'information représentative ; et f) en cas de concordance, détermination que le terminal est un terminal cible, et poursuite de la communication et/ou exécution d'une transaction seulement avec ce terminal.

[Fig. 1]

EP 3 770 866 A1

**Description**

L'invention concerne le domaine des objets portatifs temporairement couplés à des terminaux, en vue d'une transaction, par un moyen de communication de données à distance. Elle vise à la réalisation complète de la transaction sélectivement quand un objet portatif est à proximité d'une cible, et/ou à l'identification de la cible pour constituer un paramètre de la transaction.

La "transaction" inclut mais ne se limite pas au paiement ou à la démonstration de possession d'un titre tel qu'un titre de transport ; il faut comprendre plus largement tout séquencement d'opérations, incluant un échange de données, nécessitant le couplage temporaire par un moyen de communication de données à distance de deux objets, l'un au moins portatif, chacun muni de moyens de stockage et de traitement de données.

Le "terminal" est celui des objets entre lesquels a lieu la transaction et qui n'est pas l'objet portatif. La "cible" est un lieu défini, dont il est fonctionnellement requis que l'objet portatif soit proche au moment de la transaction, et/ou dont l'identification est requise pour le déroulement de la transaction.

À titre d'illustration d'un contexte d'utilisation de l'invention et du problème qu'elle vise à résoudre, considérons un système contrôlant l'accès de voyageurs à une station de métro. Les objets portatifs sont les téléphones mobiles de voyageurs, et les terminaux sont des systèmes à microprocesseur qui notamment commandent des barrières dans des lignes de passage qu'empruntent les voyageurs pour entrer et/ou sortir de la station. Le moyen de communication à distance apte à permettre un couplage temporaire entre téléphones et terminaux est la radio Bluetooth (2,4 GHz), à raison d'un émetteur/récepteur dans chaque téléphone et au moins un autre émetteur/récepteur pour chaque terminal. La transaction est un échange d'informations par Bluetooth démontrant notamment au terminal la présence dans le téléphone d'un titre donnant un droit d'usage du métro, et elle aboutit normalement à l'ouverture d'une barrière d'accès dans une ligne de passage, parfois à un débit.

Dans cette application, les cibles sont par exemple l'entrée de chaque ligne de passage, ou les deux entrées pour les lignes de passage pouvant fonctionner dans les deux sens. La proximité du téléphone mobile et d'une cible doit être une condition de la transaction, et l'identification de la cible constitue un paramètre essentiel pour la transaction, ceci afin d'ouvrir sélectivement la barrière de la ligne de passage où s'est engagé le voyageur, et de rendre improbable que cette ouverture profite à un autre voyageur engagé devant lui. De plus, la tarification peut dépendre de la ligne de passage et/ou du sens de passage.

Dans cette application, la proximité de la cible correspond à une distance maximale de l'ordre de quelques décimètres, par exemple 5 à 30 cm. Bluetooth, comme de nombreux autres moyens de communication à distance permettant un couplage temporaire, a une portée de nombreuses fois plus grande que sa longueur d'onde (12,5 cm) et dont la limite est mal contrôlée. Pour permettre néanmoins l'utilisation de Bluetooth comme moyen de couplage temporaire, sans exiger du voyageur qu'il presse un bouton sur son téléphone pour indiquer sa localisation ce qui serait malcommode, diverses options techniques sont connues de l'homme du métier, parmi lesquelles :

l'évaluation de la distance entre émetteurs/récepteurs Bluetooth par l'indicateur de puissance du signal reçu (RSSI, Received Signal Strength Indicator), avec un seuil de puissance minimal pour que la transaction s'effectue ;

la sélection par le téléphone mobile de l'émetteur/récepteur du terminal le plus proche sur la base de la comparaison des RSSI ;

la mise en œuvre avec l'émetteur-récepteur Bluetooth du terminal d'une antenne directionnelle visant à ne couvrir que la zone d'utilisation normale d'une ligne de passage, comme proposé par le US 10 163 178 B1 ;

l'émission par la cible d'un champ magnétique modulé caractéristique capté par un magnétomètre du téléphone mobile, comme proposé par le US 9 661 554 B1.

Ces techniques nécessitent un émetteur et/ou récepteur par cible. Les trois premières sont sensibles aux aléas du couplage des antennes résultant des différents modèles et orientations possibles des téléphones, et la dernière non seulement se restreint aux téléphones munis d'un magnétomètre, mais de plus la faible bande passante de ce capteur après conditionnement pour son usage habituel (boussole) ralentit l'identification de la cible.

L'invention vise à résoudre ces difficultés. Pour ce faire, elle propose de mettre en œuvre une reconnaissance optique, par l'objet portatif, d'une image dont est à cette fin munie chaque cible, image de type "code à barres" ou autre type apte à la reconnaissance optique, et qui code un identifiant de la cible.

La lecture optique de l'identifiant permet de s'assurer de la proximité d'une cible comme condition de la transaction et restitue cet identifiant, ce qui permet d'identifier la cible pour paramétrer la transaction. L'identifiant permet aussi de ne maintenir ou n'activer plus avant un canal de communication à distance entre un objet portatif et un terminal que si ce terminal peut traiter une transaction concernant la cible à proximité de laquelle cet objet portatif se trouve. Ceci contribue à diminuer les communications inutiles, libérant de la capacité de communication pour les autres dispositifs présents.

Essentiellement, l'invention prévoit un procédé comprenant les étapes (successives ou non) suivantes :

a) le placement sur chaque cible d'une image apte à la reconnaissance optique et codant un identifiant de la cible ;

b) l'enregistrement dans chaque terminal d'une information représentative du ou des identifiants de la ou des cibles que le terminal est capable de traiter

dans une transaction ;

c) dans l'objet portatif, l'usage de moyens d'acquisition et de décodage d'image pour décoder, à partir de l'image d'une cible proche, un identifiant optiquement acquis ;

d) avec un objet portatif et un terminal temporairement couplés, l'usage de moyens de communication à distance entre ces deux dispositifs pour réunir en l'un d'eux ladite information représentative et ledit identifiant optiquement acquis ;

e) la comparaison de ces informations par ledit dispositif pour déterminer si l'identifiant optiquement acquis par l'objet portatif correspond à l'identifiant de la, ou d'une des cibles que le terminal est capable de traiter dans une transaction ; et

f) la réalisation de la transaction entre cet objet portatif et ce terminal via le moyen de communication à distance si et seulement s'il y a correspondance.

Avantageusement, l'étape f) est remplacée ou précédée par : la poursuite ou l'établissement plus avant du couplage temporaire entre cet objet portatif et ce terminal seulement s'il y a correspondance.

Avantageusement, tout ou partie de l'identifiant optiquement acquis par l'objet portatif est transmis au terminal par le moyen de communication à distance et utilisé comme paramètre de la transaction.

L'image apte à la reconnaissance optique est par exemple un symbole "code à barres linéaire" (comme EAN-8 de ISO/IEC 15420), ou "code à barres 2D" (comme QR Code de ISO/IEC 18004, Data Matrix de ISO/IEC 16022, ou encore Aztec de ISO/IEC 24778), codant un identifiant de cible. L'identifiant est par exemple (mais de façon non limitative) un court numéro incrémental affecté aux cibles.

Un autocollant porteur de l'image est apposé sur chaque cible. On enregistre dans chaque terminal l'identifiant des cibles qu'il est capable de traiter dans une transaction. Les moyens d'acquisition d'image sont l'objectif et le capteur à matrice de points photosensibles de l'appareil photo numérique du téléphone mobile. Les moyens de décodage d'image sont un sous-programme de reconnaissance et décodage du type de symbole utilisé pour l'image, sous-programme qu'exécute les moyens de traitement de l'information du téléphone mobile.

Quand un voyageur s'approche d'une ligne de péage, une application du téléphone mobile est activée, par un moyen indépendant de l'invention. Cette application effectue ou fait effectuer par les autres composants logiciels du téléphone mobile l'ensemble des opérations prévues par l'invention qui concernent l'objet portatif. Elle met en fonctionnement l'acquisition et analyse d'image. Le voyageur approche son téléphone de telle sorte que les moyens d'acquisition et d'analyse d'image produisent un identifiant optiquement acquis caractéristique de l'image, et donc de la cible. Le téléphone diffuse alors cet identifiant optiquement acquis par Bluetooth à chacun des terminaux à sa portée : par exemple, l'identifiant est placé dans le champ "*advertising*" défini par "Bluetooth core specification volume 3, part C, section 11" (édition 4.0 ou supérieure), champ prévu pour l'initiation sélective de communication entre dispositifs qui ont besoin de le faire en préalable à l'ouverture d'une communication plus complète. Chaque terminal dont la radio Bluetooth est à portée d'un téléphone diffusant un identifiant optiquement acquis le compare à celui ou ceux des identifiants de cible que ce terminal contient.

En cas de correspondance, le terminal établit un complément de liaison Bluetooth sélectivement avec le téléphone qui a diffusé l'identifiant correspondant, effectue par ce canal les échanges d'information correspondant à une transaction, ouvre sélectivement la barrière correspondant à l'identifiant, et/ou adapte la tarification en conséquence.

Dans un mode de réalisation, l'identifiant d'une cible est construit à partir d'un identifiant du, ou de chacun des terminaux capables de traiter cette cible dans une transaction, et chaque terminal émet son identifiant par le moyen de communication à distance dont il est muni. Ainsi, cet identifiant est l'information représentative de l'étape b), et sa réception par l'objet portatif réalise la réunion de l'étape d).

Dans une variante de mise en œuvre, l'identifiant de la cible est constitué de l'adresse MAC (*Media Access Control*) de l'émetteur/récepteur Bluetooth du terminal qui peut la traiter (ou de leur concaténation si pluralité de terminaux ou/et d'émetteurs) et éventuellement d'un suffixe rendant unique l'identifiant de cible (nécessaire seulement si un terminal traite plusieurs cibles). Ce schéma d'identifiants de cibles fait de l'adresse MAC du terminal une information représentative du ou des identifiants de la ou des cibles que le terminal est capable de traiter dans une transaction. Le protocole Bluetooth prévoit que tout dispositif émetteur transmet son adresse MAC. Le récepteur du téléphone la reçoit dans les étapes initiales de l'établissement d'une communication à distance par Bluetooth.

On procède comme dans l'exemple précédent jusqu'à la détermination par le téléphone mobile de l'identifiant optiquement acquis de l'étape c). L'application du téléphone en extrait la ou les adresses MAC dans cet identifiant, la ou les compare à l'adresse MAC des émetteurs Bluetooth à portée, dont ceux des terminaux, et établi un canal de communication sélectivement avec le (ou un) terminal dont l'adresse MAC correspond, effectue par ce canal les échanges d'information correspondant à une transaction, et le cas échéant transfère par ce canal le suffixe de l'identifiant optiquement acquis, ce qui permet au terminal de sélectivement ouvrir la barrière correspondant à l'identifiant, et/ou adapte la tarification en conséquence.

Il est souhaitable que l'acquisition optique de l'identifiant soit aussi aisée que possible, ce qui limite à des symboles aptes à la reconnaissance optique d'une faible capacité d'information, qui peut être insuffisante pour coder l'adresse MAC de 40 bits. Face à cette difficulté, on pourra réduire l'adresse MAC modulo un entier $n$ au plus égal au nombre de valeurs qu'il est possible d'encoder. Pour $m$ adresses MAC supposées uniformément aléatoires, les adresses MAC ainsi réduites restent distinctes avec une probabilité d'au moins $1 - m(m-1)/(2n)$. L'attribution habituellement séquentielle des adresses MAC dans un lot de fabrication améliore encore cela.

Par exemple Data Matrix ECC 200 10x10 de ISO/IEC 16022 permet le codage d'un peu moins de 24 bits. Avec 3 "*codewords*" (selon la terminologie de ce standard) dans l'un des intervalles [2...48], [59...128], [130...229] (soit l'ASCII privé de NUL et les chiffres groupés paires), on peut coder $n = (47+70+100)^3$ soit 10 218 313 symboles ($\approx$ 23,2 bits). La réduction du MAC modulo $n$ permet d'encoder $m = 100$ adresses MAC, de manière unique avec une probabilité de 99,95 %.

L'objet portatif est, par nature, susceptible d'être déplacé, et ceci fait courir le risque que la transaction soit effectuée sur la base d'une localisation périmée. Ce problème conduit à proposer le perfectionnement suivant.

Avantageusement, la réalisation de l'étape f) est conditionnée à ce qu'un intervalle de temps d'une durée inférieure à un seuil prédéterminé se soit écoulé entre l'étape c) et l'étape f).

Par exemple, dans le premier exemple de réalisation, ceci peut être obtenu en limitant le temps pendant lequel l'objet portatif diffuse l'identifiant optiquement acquis suite à une acquisition, en l'absence d'une nouvelle acquisition.

L'homme du métier saura comment implémenter la limitation temporelle désirée dans les différents scénarios d'usage.

On notera que, selon le mode de réalisation envisagé, le couplage temporaire de l'étape d) peut suivre ou bien précéder l'étape c).

Par ailleurs, dans certaines applications il peut être avantageux de prévoir plusieurs cibles avec le même identifiant, par exemple une à droite et une à gauche de l'entrée d'une ligne de passage.

Dans d'autres applications, l'invention peut permettre le paiement sur automate par téléphone mobile, où il est utile de distinguer de multiples automates, et où un même automate pourrait comporter une cible pour chacun des types de produit qu'il distribue, ou encore le péage autoroutier, avec des cibles sur le côté des lignes de passage de véhicule.

On va maintenant décrire un exemple de mise en œuvre de l'invention en référence aux dessins annexés, où les mêmes références désignent d'une figure à l'autre des éléments identiques ou fonctionnellement semblables.

[Fig.1] est une représentation synoptique des différents éléments interagissant entre eux pour la mise en œuvre du procédé de l'invention.

[Fig.2] est un exemple de symbole Aztec 15x15 selon la norme ISO/IEC 24778, constituant l'image placée sur une cible, où sont figurés deux points particuliers (en traits noirs ne faisant pas partie de cette image).

[Fig.3] réalisée dans le plan défini par ces points et un foyer d'un système d'acquisition d'image, illustre l'angle de vision de ces points par ce système.

[Fig.4] illustre la captation de ce symbole par des moyens d'acquisition d'image, avec (en traits noirs ne faisant pas partie de cette captation) les longueurs en pixel des projections du segment joignant ces points selon les axes directeurs des pixels.

[Fig.5] illustre une juxtaposition en grille de 5x3 symboles de type EZCode identiques.

[Fig.6] illustre une juxtaposition de symboles de type Data Matrix, à gauche en grille, à droite en quinconce. Le symbole élémentaire, qui comprends 10x10 "modules" noirs et blancs carrés, est représenté au centre.

[Fig.7] illustre la taille minimale d'un champ d'acquisition carré de position et d'orientation quelconque pour assurer qu'un symbole complet est dans le champ, pour une juxtaposition respectivement à gauche en grille, et à droite en quinconce.

[Fig.8] donne (en ordonnées) la probabilité qu'un symbole complet soit dans ce champ pour une orientation et position aléatoire, en fonction du rapport des côtés des carrés du champ et du symbole (en abscisses), respectivement pour une juxtaposition en grille et en quinconce.

[Fig.9] illustre, à droite, une juxtaposition de symboles de type Aztec 15x15 identiques (symbole représenté à gauche isolément et à échelle agrandie), se recouvrant partiellement et dans une disposition sensiblement en quinconce, avec en superposition les deux axes directeurs de la répétition.

[Fig.10] illustre une juxtaposition plus resserrées de symboles de type Aztec 15x15 se recouvrant partiellement et dans une disposition en quinconce, avec en superposition les deux axes directeurs de la répétition. La couleur effective des modules carrés représentés en gris dépendra de la valeur encodée.

[Fig.11] illustre un modèle de symbole destiné à une image placée sur une cible. Les éléments en gris sont pour les besoins de l'illustration.

[Fig.12] illustre la position de ces symboles dans leur juxtaposition en une image. Les éléments en gris sont pour les besoins de l'illustration.

[Fig.13] illustre une image telle qu'apposée sur une cible. Les hexagones gris des deux figures précédentes sont noirs ou blancs selon la valeur encodée.

[Fig.14] est un exemple d'image numérisée optiquement acquise à partir de l'image de la Figure 13 au moyen d'un téléphone mobile.

[Fig.15] est cette image convertie en noir et blanc par seuillage.

[Fig.16] est l'image de la Figure 15, et en superposition la Figure 12 après une transformation conforme.

[Fig.17] est l'image de la Figure 15, et en superposition la Figure 12 après une transformation affine.

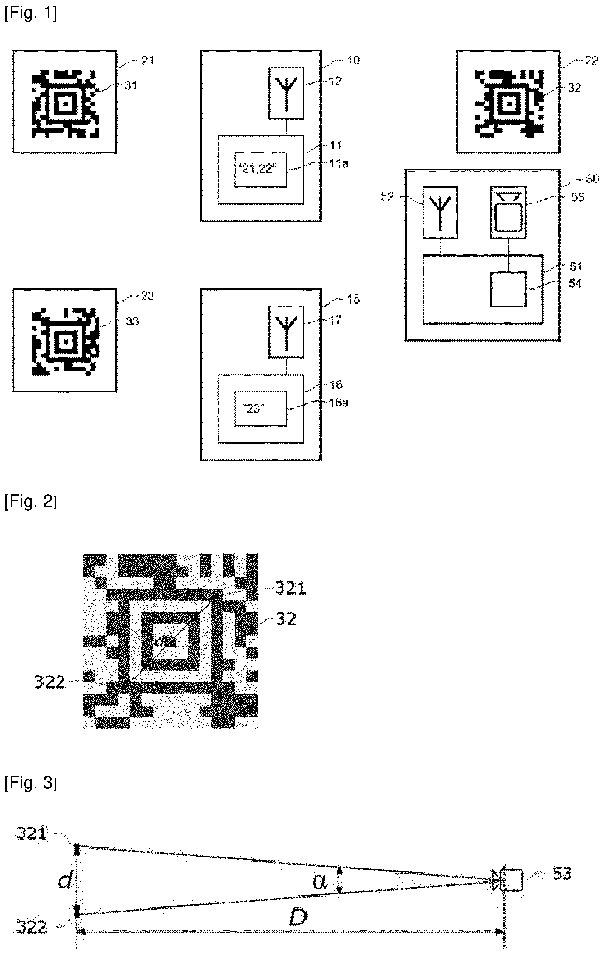

Sur la Figure 1, un terminal 10 comporte des moyens de traitement et de stockage de l'information 11 et des moyens coopérants 12 de communication à distance aptes à un couplage temporaire.

Un autre terminal 15, semblable, comporte des moyens de traitement et de stockage de l'information 16 et des moyens coopérants 17 de communication à distance aptes à un couplage temporaire.

Des cibles référencées 21 et 22 correspondent à des lieux souhaitables pour des transactions traitées par le terminal 10, et une cible référencée 23 correspond à un lieu souhaitable pour des transactions traitées par le terminal 15,

Un objet portatif 50 comporte des moyens de traitement de l'information 51, des moyens coopérants de communication à distance 52 aptes à un couplage temporaire, des moyens d'acquisition d'image 53 et des moyens 54 de décodage d'image, coopérant avec les moyens 51.

Selon l'invention, les cibles 21 à 23 sont munies d'images respectives 31 à 33 aptes à la reconnaissance optique et codant un identifiant propre à leur cible respective. Dans l'exemple, on a utilisé des symboles "Aztec" 15x15 selon la norme ISO/IEC 24778, codant des numéros d'identifiant "21", "22" ou "23" de la cible où l'image est placée.

Selon l'invention, le terminal 10 (resp. 15) conserve dans une mémoire 11a (resp. 16a) les identifiants des cibles qu'ils peut traiter lors d'une transaction, soit "21,22" (resp. "23"), cette mémoire étant associée aux moyens de traitement de l'information 11 (resp. 16) du terminal.

L'objet portatif 50 est couplé de manière temporaire au terminal 10 et/ou 15 par les moyens de communication à distance respectifs 51, 11 et 16.

Les moyens d'acquisition d'image 53 de l'objet portatif sont orientés par l'utilisateur vers la cible du lieu de la transaction, par exemple la cible 22, et ils vont capter l'image 32 dont est munie cette cible visée. Les moyens de décodage 54 produiront alors l'identifiant qui est codé dans cette image captée, soit "22".

Dans un mode de réalisation de l'invention où le lieu de comparaison est un terminal, l'objet portatif diffuse cet identifiant décodé "22" par le moyen de communication 52. Cet identifiant est capté par le ou les terminaux 10 (et/ou resp. 15) se trouvant à portée, qui comparent cet identifiant au ou aux identifiants conservés dans leur mémoire 11a (resp. 16a).

Selon l'invention, en cas de correspondance la transaction est alors réalisée sélectivement, c'est-à-dire que dans l'exemple c'est le terminal 10 qui réalisera la transaction.

Selon un aspect particulier propre aux applications de l'invention, il est utile de limiter et contrôler la distance maximale entre l'objet portatif et la cible permettant la réalisation de la transaction, de façon plus spécifique que ce que permettent les systèmes de reconnaissance optique couramment utilisés, qui sont conçus pour fonctionner à des distances très variables de l'image, pouvant dépasser le mètre.

À cet effet, un premier perfectionnement consiste, lors de l'acquisition et décodage de l'image apposée sur la cible, à déterminer par analyse de l'image acquise l'angle sous lequel le système d'acquisition d'image a reçu les rayons lumineux issus d'éléments graphiques prédéterminés de l'image apposée sur la cible qui ont été identifiés par le système de décodage, et de ne permettre la réalisation de la transaction que si cet angle est supérieur à un seuil prédéterminé.

La justification de cette méthode est que les éléments lointains sont vus sous un angle plus faible. Plus précisément, si deux éléments graphiques de l'image apposée sur la cible sont à distance $d$ l'un de l'autre, que cette image est approximativement perpendiculaire à l'axe optique et située à une distance $D$ du moyen d'acquisition de l'image qui est grande devant $d$, comme dans la représentation de la Figure 3, alors le moyen d'acquisition de l'image reçoit les rayons lumineux issus de ces deux éléments sous un angle $\alpha \approx d/D$ (en radian), où une valeur minimale de $\alpha$ correspond à une valeur maximale de D. La mise en œuvre de cette méthode ne pose pas de difficulté à l'homme du métier familier de l'optique et des systèmes de décodage d'image.

Pour le choix des éléments graphiques prédéterminés, on peut retenir le centre des "modules" élémentaires caractéristiques du symbole apte à la reconnaissance optique utilisé, comme le centre des modules de coin du carré noir de 9 modules de côté servant de repère ("*finder pattern*") dans le symbole Aztec de 15x15 modules illustré Figure 2. Une méthode pour leur localisation est donnée par la norme ISO/IEC 24778:2008, particulièrement son annexe C.

Si le symbole apte à la reconnaissance optique est composé de modules se répétant à un pas déterminé, les éléments graphiques prédéterminés peuvent être les centres de deux modules jointifs quelconques, la distance *d* devenant alors le pas de la répétition des modules.

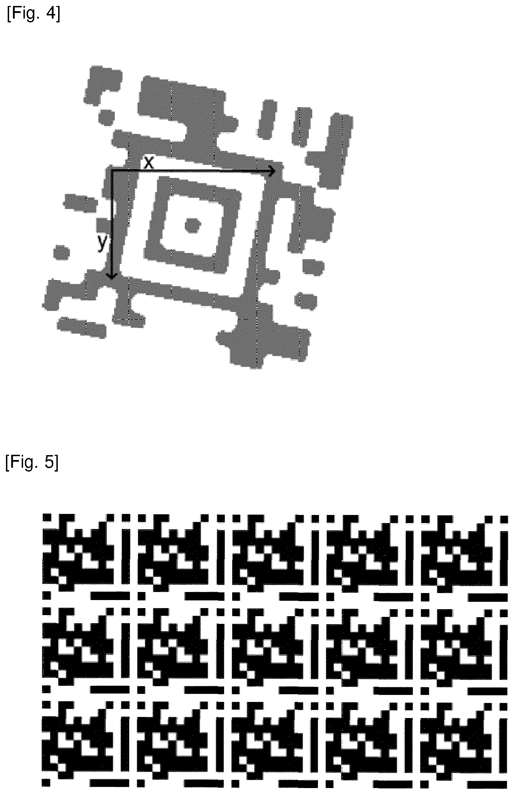

L'angle de vision α peut être déterminé par analyse de l'image numérisée obtenue du capteur. Le système de décodage d'image repère dans l'image numérisée les éléments graphiques prédéterminés et détermine le nombre de pixels *x* et *y* dans les projections selon les axes directeurs de pixels du segment qui joint ces éléments, comme illustré Figure 4.

Si l'image numérisée comporte *p* pixels carrés selon un axe directeur, et que le rapport de la dimension du capteur lumineux selon cet axe à la distance focale de l'objectif est *k*, alors l'angle de vision du segment est $\alpha \approx (k/p)\sqrt{(x^2+y^2)}$. Le coefficient sans dimension *k* dépend du capteur d'image et de son objectif, mais est en général de l'ordre de 1:1 au zoom par défaut d'un téléphone mobile, correspondant à un objectif de focale 40 mm pour une surface sensible de 24x36 mm.

La grandeur $(k/p)\sqrt{(x^2+y^2)}$ peut donc être évaluée par les moyens de calcul de l'objet portatif, et comparée au seuil prédéterminé. Parmi les moyens fonctionnellement équivalents, il est possible de conditionner le décodage à ce que le module élémentaire moyen comprenne un nombre de pixels minimal dans l'image numérisée acquise, en surface ou dans une de ses dimensions.

Quand ce premier perfectionnement est mis en œuvre, il peut arriver que la place disponible sur la cible force à réduire par homothétie la taille de l'image apposée sur la cible, ou inversement permette de l'augmenter pour faciliter la lecture. Ceci fait varier *d* et par conséquent la distance maximale *D* correspondant à un angle minimum α prédéterminé, de manière non souhaitée.

Ce problème conduit à proposer un deuxième perfectionnement, selon lequel l'objet portatif, après avoir décodé l'image de la cible et déterminé l'angle sous lequel le système de décodage d'image a reçu les rayons lumineux issus d'éléments graphiques prédéterminés de l'image identifiés par le système de décodage, ne permet la réalisation de la transaction sélectivement que si cet angle est supérieur à un seuil qui a été déterminé par un champ d'information extrait de la valeur décodée, champ qui a été auparavant choisi, au moment du placement sur la cible de l'image codée, en fonction de l'échelle de cette image et de la distance maximale de fonctionnement désirée.

Ce champ codant le seuil, extrait de la valeur décodée après capture de l'image, pourra être ignoré de l'identifiant optiquement acquis pour l'exécution des étapes b), d) e) ci-dessus, puisque ce champ ne participe pas à la fonction de ces étapes.

Enfin, dans l'un ou l'autre cas, on peut avantageusement prévoir qu'en cas d'inhibition de la transaction (lorsque l'angle est inférieur à la valeur de seuil prescrite ou décodée), l'utilisateur de l'objet portatif soit informé de cette inhibition et soit invité à approcher l'objet portatif de la cible, voire que l'amplitude de déplacement nécessaire lui soit indiquée.

Le système de l'invention nécessite un moyen d'acquisition et de décodage d'image d'un usage aisé. Dans un contexte où l'objet portatif est un téléphone mobile, l'optique des moyens d'acquisition d'image est habituellement optimisée pour un fonctionnement à des distances supérieures à celle souhaitable dans l'application, qui sont de l'ordre de 5 à 30 cm. Il peut en résulter une netteté imparfaite nuisible au bon fonctionnement des moyens de décodage d'image, ce d'autant plus que le motif élémentaire dont est composé le symbole apte à la reconnaissance optique est petit.

Ceci oblige à agrandir autant que faire se peut les modules élémentaires dont est composé le symbole, et donc à en limiter le nombre dans la plus grande dimension du symbole. Malgré la faible capacité d'encodage nécessaire (24 bits, voire moins), un "code à barre linéaire" est peu adéquat. Parmi les symboles aptes à la reconnaissance optique courants, il faut préférer un "code à barre 2D" sensiblement carré, hexagonal ou circulaire, avec peu de modules élémentaires.

Avec de grands modules élémentaires, et particulièrement à faible distance, le risque est significatif que suite à un cadrage imparfait des moyens d'acquisition d'image, le symbole à décoder ne soit pas présent en entier dans le champ utile des moyens d'acquisition et de décodage d'image, et que le décodage échoue pour cette raison.

Pour résoudre ce problème de visée imparfaite, il est avantageux que l'image soit constituée, comme illustré Figure 5, par juxtaposition de plusieurs exemplaires du même symbole apte à la reconnaissance optique. Cela augmente considérablement la probabilité qu'un symbole complet soit dans le champ utile des moyens d'acquisition et de décodage d'image, sans qu'aucune modification soit nécessaire à ceux-ci.

Cela est connu, par exemple d'après le EP 1 886 246 B1 et illustré dans les "EZCode® Spécifications" qui appliquent ce procédé, et auxquelles correspond la Figure 5.

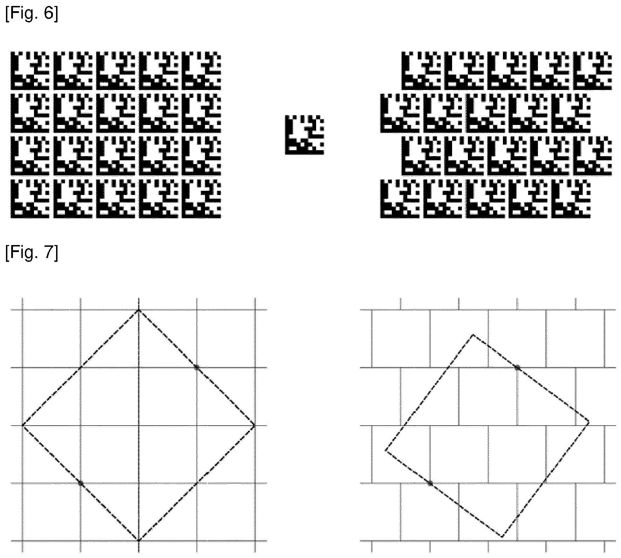

Dans ces systèmes connus, le symbole est juxtaposé selon une grille, comme illustré dans la partie gauche de la Figure 6. Cette disposition peut être améliorée en disposant les symboles "en quinconce" comme illustré dans la partie droite de la Figure 6.

Pour un champ utile carré des moyens d'acquisition d'image, placé dans une position et orientation quelconque relativement à la juxtaposition de symboles, si l'on souhaite pouvoir garantir qu'un symbole carré complet est dans le champ, alors il faut que le rapport entre le côté du champ d'acquisition et le côté du symbole soit d'au moins $\sqrt{(2^2+2^2)} \approx 2,82$ dans la disposition en grille, alors qu'il suffit de $\sqrt{(2^2+1,5^2)} = 2,50$ dans la disposition en quinconce, comme illustré Figure 7.

Si l'échelle d'un symbole carré sur l'image placée sur la cible est limitée par la contrainte d'avoir un symbole entier dans un champ carré pour toute orientation et position de celui-ci, la disposition en quinconce permet donc d'augmenter la surface d'un module élémentaire d'un facteur 32/25 = 1,28 par rapport à la disposition en grille, ce qui diminue les conséquences d'un flou d'origine optique.

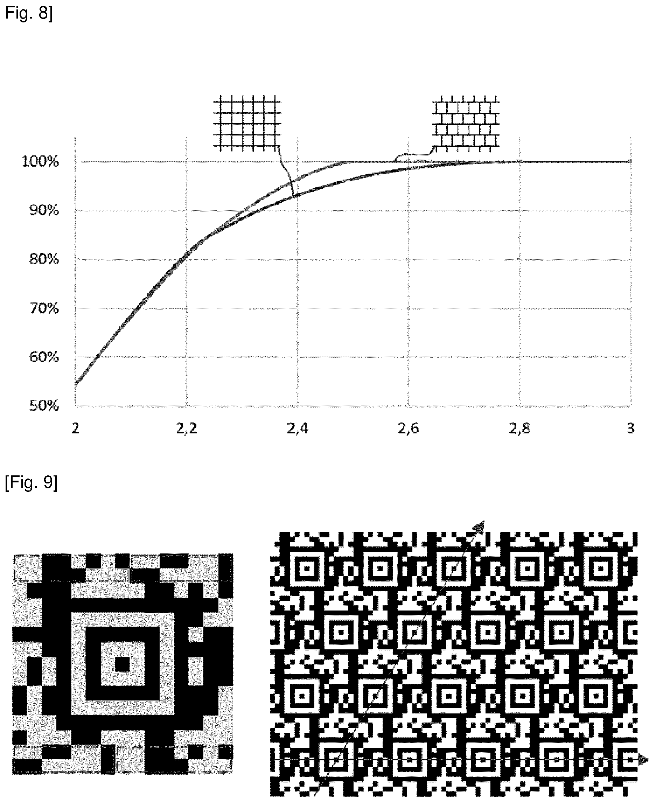

La Figure 8 est obtenue par simulation du positionnement et orientation aléatoire d'un champ utile carré des moyens d'acquisition, relativement à des symboles carrés disposés en grille ou en quinconce. Elle donne la probabilité qu'un symbole complet soit dans le champ, en fonction du rapport des côtés des carrés. Cette probabilité atteint 100% pour un rapport vers 2,8 ou 2,5 selon la disposition, comme analysé précédemment. On voit que la disposition en quinconce procure une amélioration appréciable pour un rapport dans l'intervalle [2,3...2,8].

Plus généralement, pour des symboles circulaires ou carrés, la probabilité qu'un symbole complet soit dans un champ d'acquisition circulaire ou carré est maximisée quand le symbole est répété au même intervalle régulier selon deux axes directeurs formant un angle à 60°.

On définit les axes directeurs comme les deux axes non parallèles selon lesquels le symbole se répète aux intervalles les plus petits ; en cas d'égalité entre trois axes, on en retiendra deux quelconques, qui forment alors un angle de 60° exactement.

Les symboles répétés peuvent être identiques, éventuellement à une rotation près d'une répétition à l'autre, ce qui ne modifie pas la valeur décodée. Plus généralement les symboles doivent seulement être équivalents, au sens où la valeur qui en est décodée produit un résultat identique dans le contexte de l'application. Par exemple, si l'application n'agit qu'en fonction des deux premiers caractères décodés d'un symbole et ignore les autres, des symboles graphiquement différents mais dont les deux premiers caractères décodés sont identiques seront considérés comme équivalents.

Ainsi, selon un perfectionnement, de multiples symboles équivalents sont juxtaposés pour former l'image apposée sur la cible, en se répétant selon deux axes directeurs à intervalles sensiblement égaux, en tout cas dans un rapport compris entre 0,5 et 2, avec de façon caractéristique un angle entre ces axes de sensiblement 60°, en tout cas compris entre 35° et 85°.

La disposition en quinconce de symboles carrés répond à cette définition : le rapport des intervalles de répétition est $\sqrt{(1^2+0,5^2)} \approx 1,12,$ et l'angle entre les axes est $arctan(2) \approx 63,4°$.

Il est possible de se rapprocher davantage de la disposition la plus favorable en conservant des symboles carrés d'un modèle connu, ne nécessitant aucune méthode de décodage nouvelle, tout en améliorant l'efficacité de celle-ci par la répétition plus rapprochée des symboles, laquelle permet d'agrandir les modules élémentaires. Pour cela, il faut faire se recouvrir partiellement les symboles.

Pour que ce recouvrement permette encore un décodage robuste, il est souhaitable que les zones qui se recouvrent soient identiques. Par exemple, sur la Figure 9 on utilise un symbole Aztec 15x15 où la valeur codée est choisie de manière telle que deux bandes de 15x2 modules élémentaires permettent un recouvrement avec les motifs sensiblement en quinconce. Le rapport des intervalles de répétition est $(\sqrt{(13^2+7^2)})/15 \approx 0,98,$ et l'angle entre les axes directeurs $arctan(13/7) \approx 61,7°$.

Le recouvrement crée 30 contraintes binaires dans le choix des valeurs encodées par les symboles. Ainsi, le système de la Figure 9 utilise des symboles Aztec 15x15 encodant 9 lettres majuscules (ici, ABAZDHGKF), dont les 2 premières peuvent être choisies librement et constituent la partie utile de la valeur encodée. Seules quelques combinaisons des 7 lettres suivantes permettent le recouvrement.

Ces lettres supplémentaires peuvent être trouvées par essai, ou mieux de manière algébrique en exploitant le fait que les bits de détection et de correction d'erreur du symbole Aztec sont une fonction linéaire en algèbre de Boole, de sorte que la recherche des lettres nécessaires au recouvrement se réduit à un système linéaire d'équations qui peut être résolu par élimination gaussienne, et à quelques autres contraintes résultant du transcodage de lettres en bits et à la prohibition de certaines séquences de bit, en pratique rares.

On peut même exprimer l'ensemble des conditions sous la forme d'un problème de satisfiabilité aux contraintes majoritairement linéaires, ce qui permet une résolution par un *satisfiability solver* comme Cryptominisat (Mate Soos, Karsten Nohl, Claude Castelluccia, Extending SAT Solvers to Cryptographic Problems, dans Theory and Applications of Satisfiability Testing - SAT 2009, doi : 10.1007/978-3-642-02777-2_24).

Avec des symboles non plus égaux, mais équivalents au sens que l'application en extrait la même information utile de la valeur décodée, et une recherche algébrique, il est possible de porter le recouvrement entre symboles Aztec 15x15 adjacents à 15x3 modules dans une direction et 1x15 modules perpendiculairement. Le rapport des intervalles de répétition est 1, et l'angle entre les axes directeurs est 2 $arctan(7/12) \approx 60,5°$.

La combinaison du recouvrement important des modules, et de la correction d'erreur des modules Aztec qui permet le décodage même si un coin de symbole est tronqué d'une dizaine de modules élémentaires environ, donne un fonctionnement confortable sans visée ni orientation, une largeur du champ d'environ 29 modules, soit moins de 2 fois la largeur du symbole, à condition que l'acquisition optique de ces modules soit suffisamment nette, ce qui influence beaucoup la limite basse de la distance de lecture possible.

Dans ce qui précède, on utilise des systèmes de décodage d'un type connu. Ceux-ci sont conçus pour le décodage d'un seul module, et ne font aucun traitement spécifique à la répétition régulière des modules. Il y a là un potentiel important d'amélioration, pour réduire le nombre de modules par symbole, donc augmenter la taille des modules pour un champ d'acquisition donné, et ainsi mieux tolérer un flou optique des moyens d'acquisition d'image.

Selon un perfectionnement indépendant, de multiples symboles équivalents, au sens qu'ils encodent une information commune, sont juxtaposés pour former l'image apposée sur la cible, en se répétant selon deux axes directeurs formant un angle prédéterminé, à intervalles prédéterminés selon chacun des deux axes ; cette image est acquise et transformée en une matrice de pixels fournie en entrée à un système de décodage ; et celui-ci, de façon caractéristique, combine l'information provenant des pixels correspondants à l'acquisition d'au moins 2 symboles pour réaliser l'opération de décodage, et/ou déterminer son succès et/ou la valeur décodée.

Dans une forme particulière de ce perfectionnement, chaque symbole comporte un repère graphique à un emplacement du symbole indépendant de la valeur encodée par les autres modules composant le symbole, le système de décodage repère les positions d'au moins 2 repères dans l'image acquise, positions qui de manière caractéristique proviennent de symboles distincts et sont combinées pour localiser l'emplacement dans l'image des modules encodant l'information utile.

L'avantage caractéristique est que l'orientation et l'échelle peuvent être déterminées à partir d'un seul repère quasi ponctuel par symbole, ce qui permet de diminuer la surface consacrée au nécessaire repérage par rapport aux "codes à barre 2D" existants, qui utilisent un repère de grande taille (Aztec), ou plusieurs repères (Datamatrix, QR Code).

Dans une seconde forme du perfectionnement ci-dessus, l'information provenant de l'acquisition d'au moins 2 symboles est combinée par un système de détection et/ou correction d'erreur ("EDC" ou "ECC") pour décider d'un décodage satisfaisant et/ou former l'information décodée exempte d'erreur.

L'avantage caractéristique est que la détection et/ou correction d'erreur est fondée sur le contenu de symboles adjacents, diminuant voire supprimant la nécessité de consacrer une partie de la surface d'un symbole à la nécessaire détection et correction d'erreur.

Dans la forme la plus simple, les multiples symboles sont graphiquement identiques, de sorte que le système de décodage peut comparer la valeur (binaire dans le cas de modules en noir et blanc) extraite des fragments d'image numérisée correspondant à des modules homologues dans au moins 2 symboles, une différence permettant de détecter une erreur. Avec des modules homologues dans au moins 3 symboles, la logique majoritaire permet la correction d'une erreur affectant un module.

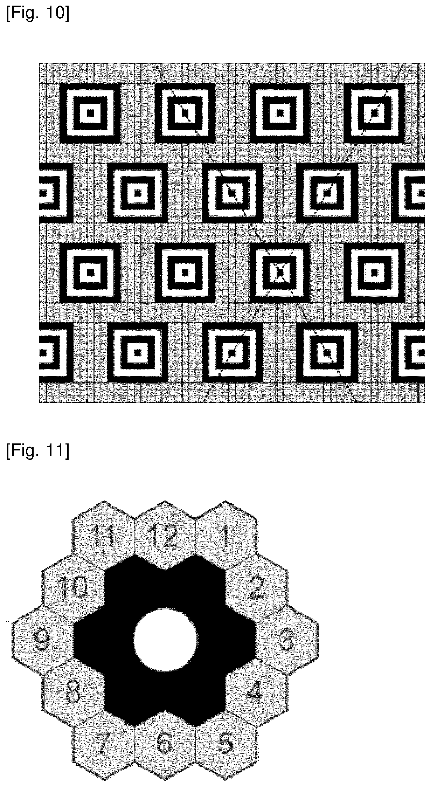

Une autre forme utilisant une logique de correction d'erreur plus performante est réalisée dans le système à symboles Aztec se recouvrant de la Figure 9, dès lors que l'on définit le symbole utilisé comme un rectangle de 13 lignes de 15 modules obtenu en tronquant le symbole Aztec 15x15 de deux lignes de 15 modules, par exemple celles du bas (ou celle du haut et celle du bas pour conserver le repère au centre du module). On voit que lors du décodage, l'ECC du système Aztec combine des informations provenant de 3 symboles. Le système de la Figure 10 porte cela à 4 symboles.

On va maintenant décrire de façon détaillée un exemple avantageux de mise en œuvre conjointe des perfectionnements exposés ci-dessus.

La Figure 11 représente un symbole du système proposé. Il est formé d'un disque repère blanc ; de 12 modules hexagonaux périphériques chacun de même superficie que le disque, juxtaposés en un hexagone concentrique au disque, avec leurs côtés jointifs ; et d'une zone noire intermédiaire. Les 12 modules périphériques auront chacun une couleur choisie selon la valeur encodée ; ils sont figurés en gris. Les autres éléments en gris (frontières des modules et du repère, numérotation horaire des modules périphériques) seront omis dans la réalisation.

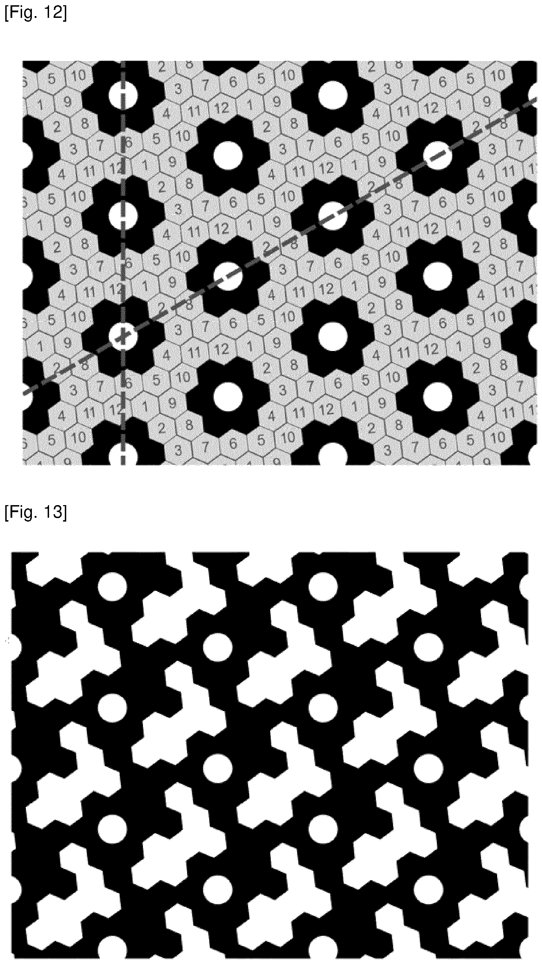

La Figure 12 représente la géométrie de la juxtaposition de symboles qui forme une image, dans ce qui est commun à toutes les images placées sur les cibles. Les symboles reproduits selon deux axes directeurs à 60°, jointifs, dans la même orientation, à intervalles égaux de $\sqrt{(7{,}5^2 + 3/4)} \approx 7{,}55$ fois le côté d'un hexagone, ce qui réalise la disposition optimale de exposée plus haut. L'un des axes directeur est à $arctan(1/(5\sqrt{3})) \approx 6{,}6°$ de l'axe de 12 h des symboles, dans le sens horaire, de sorte que le module 12 d'un symbole est adjacent aux modules 6 et 7 d'un éventuel symbole contigu. Les symboles des bords de l'image sont tronqués. Les modules hexagonaux de même numéros auront la même couleur, choisie selon la valeur encodée; ils sont figurés en gris. Les autres éléments en gris (axes directeurs de la répétition, frontières des hexagones, numérotation) seront omis dans la réalisation.

Avec cette disposition, les repères ne permettent de déterminer l'orientation que modulo une rotation de 60°. Ceci impose que les séquences de 12 bits codées par les 12 modules périphériques de chaque symbole ne soient pas deux à deux identiques par rotation d'un nombre pair de bits. Ceci restreint de 4096 à 700 le nombre de séquences utilisables.

Cette restriction est faite systématiquement, en retenant parmi 1 à 6 séquences équivalentes par ces 6 rotations celle qui code en binaire la plus petite valeur, avec noir codant 1 et le poids binaire des bits croissant avec leur numéro, considérée comme le représentant canonique de ces séquences.

Par exemple, une des séquences canonique est 000100100111, correspondant aux modules 9, 6, 3, 2, 1 noirs et les 7 autres blancs, car elle code en binaire une valeur plus petite que les séquences 110001001001, 011100010010, 100111000100, 001001110001 et 010010011100 qui s'en obtiennent par rotation de 2 bits.

De plus, la séquence ne doit pas faire apparaitre d'hexagone de 7 modules avec le module central blanc et les 6 autres modules noirs, ce qui créerait une ambiguïté sur le centre des symboles lors du décodage. Si un module est blanc, alors l'un au moins de ses modules voisins doit être blanc. Par exemple, si le module 1 est blanc, alors l'un au moins des modules 2, 5, 6, 9, 12 doit être blanc ; si le module 4 est blanc, alors l'un au moins des modules 3, 5, 10, 11 doit être blanc.

Ces 12 contraintes combinées restreignent de 700 à 541 le nombre de séquences utilisables. La capacité utile d'encodage d'une image est donc une valeur parmi 541, ce qui est suffisant pour l'identification d'autant de cibles.

La Figure 13 représente l'image apposée sur une cible pour coder la séquence binaire donnée plus haut, dont on voit qu'elle répond à la condition exposée ci-dessus.

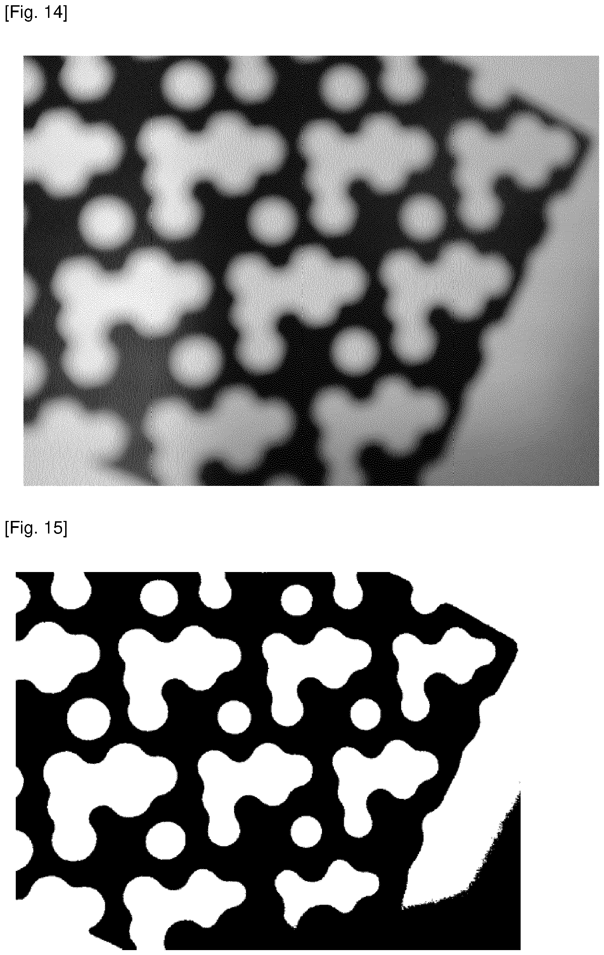

L'image optiquement acquise à partir de la Figure 13 apposée sur une cible est illustrée Figure 14. Elle est composée de 600 lignes de 800 pixels chacun codant de 0 à 255 la luminosité perçue par le capteur à l'emplacement correspondant, après une première opération recombinant en un pixel l'information reçue de multiples pixels du capteur. Le flou est d'origine optique, il résulte d'une faible distance entre le téléphone mobile et la cible.

Le système de décodage converti l'image en noir et blanc. Un seuillage fixe donne le résultat Figure 15.

Le système de décodage identifie dans cette image les paires de zones blanches :

assimilables à des disques,
et de diamètres comparables,
et dont le rapport de la distance des centres à la moyenne des diamètres est de l'ordre du rapport du pas de reproduction des symboles selon les axes directeurs sur le diamètre du disque blanc central des repères dans l'image apposée sur la cible,
et dont la distance des centres est au minimum $(d/D)(p/k)$ pixels où $d$ est la distance entre centres de symboles jointifs sur l'image apposée sur la cible, $D$ est la distance maximale souhaitée entre l'objet portatif et la cible, $p$ est le nombre de pixels dans un côté de l'image acquise, $k$ est le rapport de la dimension du capteur lumineux selon cet axe à la distance focale de l'objectif.

Le fait de combiner des informations provenant de repères dans deux symboles distincts implémente les perfectionnements exposés plus haut.

Aux fins de réaliser rapidement le décodage, le système de décodage identifie dans l'image acquise en noir et blanc les zones blanches, c'est-à-dire formées de pixels blancs entre lesquels il existe un chemin de pixels blancs jointifs par leurs côtés, et pour chacune évalue :

le nombre de pixels n,
les valeurs minimales x et $y$ ainsi que maximales $X$ et $Y$ des coordonnées des pixels selon les deux axes des pixels de l'image acquise,
les sommes $C_x$ et $C_y$ de ces coordonnées et les sommes $S_x$ et $S_y$ du carré de ces coordonnées sur chacun de ces deux axes ;
et vérifie que la zone respecte les quatre critères suivants qui combinés caractérisent suffisamment un disque :

$$X\text{-}x \approx Y\text{-}y$$

$$(X\text{-}x)(Y\text{-}y)/n \approx 4/\pi$$

$$S_x/n^2 - (C_x)^2/n^3 \approx 1/(4\pi)$$

$$S_y/n^2 - (C_y)^2/n^3 \approx 1/(4\pi)$$

et dans l'affirmative, les coordonnées du centre de la zone sont évaluées comme $C_x/n$ et $C_y/n$, et le diamètre comme $\sqrt{(4n/\pi)}$ pixels,
puis ces zones sont assemblées en paires de diamètres comparables et telles que le rapport de la distance des centres à la moyenne des diamètres est de l'ordre de 4,2, avec une large tolérance.

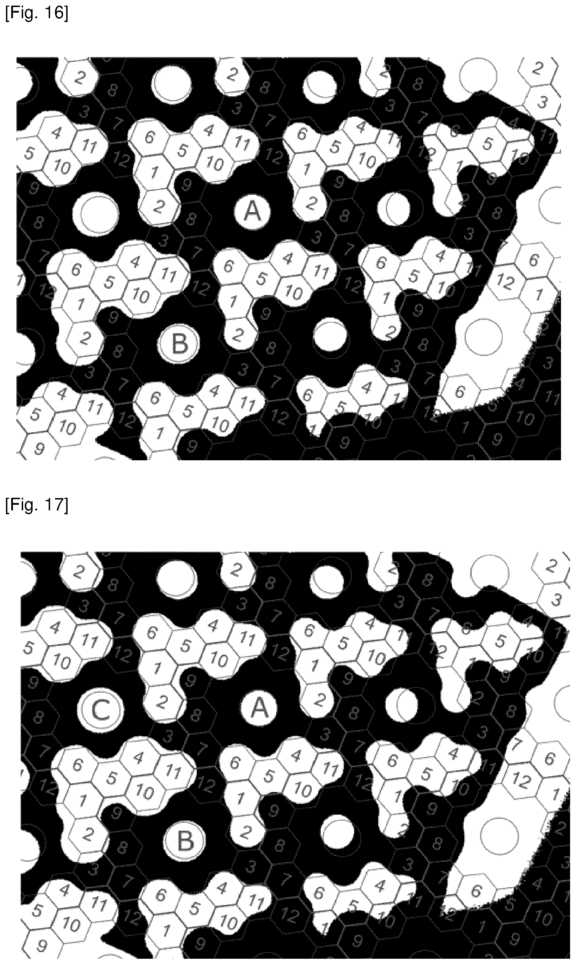

Il est examiné si ces paires peuvent être regroupées en triplets formant 3 paires. Dans la négative, le système de décodage exploite une paire (A, B) pour localiser les hexagones de ces 2 symboles, et une douzaine d'autres proches numérotés 1 à 12, par transformation conforme (c'est-à-dire conservant les rapports de distances), classique en décodage de codes 2D, comme illustré Figure 16.

Dans l'affirmative, le système de décodage exploite un triplet (A, B, C) pour localiser les hexagones de ces 3 symboles par transformation affine (c'est-à-dire conservant le parallélisme des droites), également classique, comme illustré Figure 17.

Muni des coordonnées des centres de ces 36 modules, le système de décodage en détermine la couleur, sur la base du pixel central.

Les données issues de la paire ou du triplet sont considérées comme valides sélectivement si les 3 modules de chacun des 12 numéros sont décodés de la même couleur. Dans l'affirmative, une séquence de 12 bits est formée à partir de ces 12 couleurs. Dans les Figures 16 et 17, ces conditions sont remplies et la séquence est 100111000100, dans les conventions plus haut.

Cette comparaison à des fins de détection d'erreur des informations provenant de repères dans deux symboles distincts implémente le perfectionnement que l'on vient d'exposer.

Il est recherché la séquence canonique équivalente à la séquence obtenue selon les conventions données plus haut, ce qui conclut le décodage. Dans l'exemple on obtient la séquence 000100100111 qui est celle codée par la Figure 13.

Dans une variante avantageuse, la détermination de la couleur d'un module se fonde sur l'image numérisée acquise avant seuillage autour du centre du module, avec un seuil déterminé selon la luminosité au centre du repère de son symbole et de la bande noire qui l'entoure.

Dans une variante avantageuse, on définit un minimum et un maximum au nombre de modules noirs parmi les 12 modules périphériques d'un symbole. Au prix d'une diminution du nombre de symboles qu'il est possible d'encoder, ceci permet de choisir un seuil plus favorable pour les opérations de transformation en noir et blanc, puisque la luminosité moyenne d'un symbole est bornée.

Dans une variante avantageuse, reprenant des techniques bien connues, on fixe la parité du nombre de symboles noirs parmi les 12 modules périphériques d'un symbole, ou plus généralement on prévoit dans ces modules un code de détection ou correction d'erreur complémentaire. Au prix d'une diminution du nombre de symboles qu'il est possible d'encoder, ceci améliore la robustesse du système.

Dans une variante avantageuse, la règle exposée plus haut est durcie, en ajoutant la règle que si 3 modules deux à deux jointifs sont blancs, alors l'un au moins des modules jointifs à un au moins de ces trois modules doit être blanc. Au prix d'une légère diminution du nombre de symboles qu'il est possible d'encoder, ceci améliore la robustesse du système en rendant plus improbable la fausse détection d'un repère par confusion des 3 modules blancs avec un disque blanc repère.

Dans une variante avantageuse, une logique majoritaire est utilisée pour déterminer la couleur correspondant à chaque numéro, fondée sur la couleur décodée sur les modules de plus de 2 symboles, tous faisant partie de paires identifiées comme indiqué plus haut.

Dans une variante avantageuse, la position de 4 repères est utilisée pour faire une correction de perspective, classique en décodage de codes 2D.

Le procédé est transposable à des modules et symboles d'autres formes se prêtant à la juxtaposition, notamment carrés, rectangulaires, triangulaires ; aux juxtapositions en grille; à des modules pouvant prendre plusieurs couleurs, ce qui augmente considérablement la capacité d'encodage. Ces variantes et ce perfectionnement sont eux-mêmes connus.

Le procédé est transposable à des symboles utilisant un nombre différent, voire variable de modules par symboles. On peut en particulier généraliser à des symboles constitués de $(n+1)(n+2)/2 + [n^2/4]$ modules hexagonaux jointifs, sensiblement en hexagone. La juxtaposition de symboles identiques ou équivalents, et l'utilisation des modules des symboles avoisinants se trouvant dans le champ des moyens d'acquisition, conserve un intérêt jusqu'à quelques centaines de modules par symboles.

## Revendications

1. Un procédé d'identification et de couplage d'un objet portatif (50) à au moins un terminal cible (10) physiquement situé à proximité de l'objet portatif parmi une pluralité de terminaux (10 ; 15) avec lesquels peut être établie une communication sans contact entre l'objet portatif et chacun des terminaux,

   a) dans lequel chaque terminal (10 ; 15) porte au moins une image codée (31, 32 ; 33) distinctive, optiquement reconnaissable, l'image codée du au moins un terminal cible étant différente des images codées respectives des autres terminaux de la pluralité de terminaux, et codant un identifiant numérique (21 ; 22) du au moins un terminal cible,
   b) dans lequel chaque terminal comprend une mémoire (11 ; 16) dans laquelle est enregistrée une information représentative (11a ; 16a), dérivée de l'identifiant (21 ; 22) du terminal respectif,

   le procédé comprenant les étapes suivantes :

   c1) par une caméra (53) de l'objet portatif (50), acquisition de l'image codée (32) du terminal (10) physiquement situé à proximité de l'objet portatif ;
   c2) décodage par l'objet portatif de l'image acquise pour produire un identifiant optiquement acquis ;
   d1) établissement d'une communication sans fil entre un ou plusieurs des terminaux de la pluralité de terminaux situés à portée de communication sans fil de l'objet portatif ;
   d2) association, dans l'objet portatif et/ou dans un terminal, de l'identifiant optiquement acquis et de l'information représentative correspondant au terminal respectif ;

e) comparaison de l'identifiant optiquement acquis et de l'information représentative ainsi associés ; et

f) en cas de concordance de l'identifiant optiquement acquis et de l'information représentative comparés, détermination que le terminal dont l'identifiant est concordant est un terminal cible, et poursuite de la communication et/ou exécution d'une transaction seulement avec ce terminal cible.

2. Le procédé de la revendication 1, dans lequel, chaque terminal portant une pluralité d'images codées semblables répétées sous forme d'une grille, l'étape c1) d'acquisition d'image comprend l'obtention d'une vue de tout ou partie de la grille puis la discrimination d'une image codée dans la vue de la grille ainsi obtenue, le décodage de l'étape c2) étant opéré sur l'image codée ainsi discriminée.

3. Le procédé de la revendication 2, dans lequel la pluralité d'images codées semblables sont réparties à intervalles réguliers dans la grille selon deux axes directeurs non parallèles, orthogonaux ou non orthogonaux, et/ou sont décalées en quinconce entre rangées successives de la grille.

4. Le procédé de la revendication 3, dans lequel les deux axes directeurs sont des axes non orthogonaux formant entre eux un angle compris entre 35° et 85°, de préférence un angle de 60°.

5. Le procédé de la revendication 1 comprenant en outre :

à l'étape c2) de décodage de l'image de la cible par l'objet portatif, la détermination de l'angle sous lequel le système de décodage d'image a reçu les rayons lumineux issus d'éléments graphiques prédéterminés de l'image qui ont été identifiés par le système de décodage ; et
à l'étape f), la poursuite de la communication et/ou l'exécution d'une transaction avec le terminal cible seulement si l'angle déterminé est supérieur à un seuil prédéterminé.

6. Le procédé de la revendication 5,
dans lequel l'image codée distinctive optiquement reconnaissable de chaque terminal code en outre une échelle de l'image et/ou une distance maximale de fonctionnement désirée,
et dans lequel le procédé comprend en outre :

à l'étape c2) de décodage de l'image de la cible par l'objet portatif, la détermination d'un champ, extrait de la valeur décodée, représentatif de l'échelle de l'image et/ou de la distance maximale de fonctionnement désirée ; le calcul du seuil prédéterminé en fonction de l'échelle de l'image ; et
à l'étape f), la poursuite de la communication et/ou l'exécution d'une transaction avec le terminal cible seulement si l'angle déterminé est supérieur au seuil calculé et/ou si la distance est inférieure à la distance maximale décodée.

7. Le procédé de la revendication 1, dans lequel l'étape f) comprend en outre :

par l'objet portatif, la transmission de l'identifiant optiquement acquis au terminal cible, et
par le terminal cible, l'utilisation de l'identifiant optiquement acquis transmis comme paramètre de transaction.

8. Le procédé de la revendication 1, dans lequel l'étape d1) comprend en outre la transmission à l'objet portatif par chacun desdits un ou plusieurs terminaux d'un message incluant l'identifiant respectif du terminal, et
les étapes d2) et e) sont mise en œuvre par l'objet portatif.

9. Le procédé de la revendication 8, dans lequel l'information représentative enregistrée dans la mémoire de chaque terminal est dérivée de l'adresse MAC de l'émetteur/récepteur sans fil de chaque terminal susceptible d'être un terminal cible pour une transaction opérée avec l'objet portatif.

10. Le procédé de la revendication 8, dans lequel l'exécution de l'étape f) est conditionnée à ce que l'intervalle de temps écoulé entre la fin de l'étape c1) et le début de l'étape f) soit inférieur à une durée de seuil prédéterminée.

[Fig. 1]

[Fig. 2]

[Fig. 3]

[Fig. 4]

[Fig. 5]

[Fig. 6]

[Fig. 7]

Fig. 8]

[Fig. 9]

[Fig. 10]

[Fig. 11]

[Fig. 12]

[Fig. 13]

[Fig. 14]

[Fig. 15]

[Fig. 16]

[Fig. 17]

**Europäisches Patentamt**
**European Patent Office**
**Office européen des brevets**

# RAPPORT DE RECHERCHE EUROPEENNE

Numéro de la demande

EP 20 18 7732

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2016/042333 A1 (HO PATRICK [US] ET AL) 11 février 2016 (2016-02-11) * abrégé * * figures 3-5 * * alinéa [0007] - alinéa [0010] * * alinéa [0023] - alinéa [0024] * * alinéa [0030] - alinéa [0040] * * alinéa [0045] - alinéa [0052] * ----- | 1-10 | INV. G07B15/00 G07C9/30 G06Q20/32 G06Q20/20 G06F9/46 |
| X | US 2016/042485 A1 (KOPEL MATTHEW [US]) 11 février 2016 (2016-02-11) * abrégé * * figures 35-41 * * alinéa [0139] - alinéa [0148] * ----- | 1-10 | ADD. G07B17/00 G06K9/46 G06K7/14 |
| A | WO 2008/154611 A2 (HONEYWELL INT INC [US]; HUSSEY ROBERT M [US] ET AL.) 18 décembre 2008 (2008-12-18) * abrégé * * figures 4-7 * * page 2, ligne 4 - ligne 8 * * page 5, ligne 11 - ligne 16 * * page 16, ligne 28 - page 18, ligne 20 * ----- | 1-10 | |

**DOMAINES TECHNIQUES RECHERCHES (IPC)**

G06Q
G06F
G07G
G06K
G07B
G07C

Le présent rapport a été établi pour toutes les revendications

| Lieu de la recherche | Date d'achèvement de la recherche | Examinateur |
|---|---|---|
| La Haye | 4 novembre 2020 | Saraceni, Alessandro |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 18 7732

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-11-2020

| Document brevet cité au rapport de recherche | Date de publication | Membre(s) de la famille de brevet(s) | Date de publication |
|---|---|---|---|
| US 2016042333 A1 | 11-02-2016 | AU 2015301818 A1<br>CA 2956975 A1<br>EP 3180776 A1<br>US 2016042333 A1<br>WO 2016025528 A1 | 16-02-2017<br>18-02-2016<br>21-06-2017<br>11-02-2016<br>18-02-2016 |
| US 2016042485 A1 | 11-02-2016 | AU 2015301953 A1<br>EP 3204887 A1<br>US 2016042485 A1<br>US 2020082488 A1<br>WO 2016025402 A1 | 10-08-2017<br>16-08-2017<br>11-02-2016<br>12-03-2020<br>18-02-2016 |
| WO 2008154611 A2 | 18-12-2008 | EP 2165289 A2<br>WO 2008154611 A2 | 24-03-2010<br>18-12-2008 |

EPO FORM P0460

Pour tout renseignement concernant cette annexe : voir Journal Officiel de l'Office européen des brevets, No.12/82

# EP 3 770 866 A1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 10163178 B1
- US 9661554 B1

- EP 1886246 B1

**Littérature non-brevet citée dans la description**

- Bluetooth core specification. vol. 3

- **MATE SOOS ; KARSTEN NOHL ; CLAUDE CAS-TELLUCCIA.** *Extending SAT Solvers to Cryptographic Problems, dans Theory and Applications of Satisfiability Testing - SAT 2009*